# EUROPEAN PATENT SPECIFICATION

(11) **EP 2 757 748 B1**
(45) Date of publication and mention of the grant of the patent: **24.02.2016**
(21) Application number: 13193949.8
(22) Date of filing: 21.11.2013
(51) Int. Cl.: H04L 12/721, G06F 15/173

(54) **Information processing system and method of controlling the same**
Informationsverarbeitungssystem und Steuerverfahren dafür
Système de traitement d'informations et son procédé de contrôle

(30) Priority: 17.01.2013 JP 2013006380
(43) Date of publication of application: 23.07.2014
(73) Proprietor: FUJITSU LIMITED, Kawasaki-shi Kanagawa 211-8588 (JP)
(72) Inventor: Nose, Takafumi, Kanagawa, 211-8588 (JP); Miura, Kenichi, Kanagawa, 211-8588 (JP)
(74) Representative: Wilding, Frances Ward

(56) References cited:
- EP-A1- 2 466 485
- US-A- 5 649 198
- US-A1- 2008 186 853
- KOIBUCHI M ET AL: "Performance evaluation of routing algorithms in RHiNET-2 cluster", CLUSTER COMPUTING, 2003. PROCEEDINGS. 2003 IEEE INTERNATIONAL CONFEREN CE ON DEC. 1-4, 2003, PISCATAWAY, NJ, USA,IEEE, LOS ALAMITOS, CA, USA, 1 December 2003 (2003-12-01), pages 395-402, XP010674281, DOI: 10.1109/CLUSTR.2003.1253339 ISBN: 978-0-7695-2066-7

## Description

### FIELD

The embodiments described herein are related to an information processing system and a method of controlling an information processing system.

### BACKGROUND

Extensive numerical analyses in the science and technology fields involve a large number of calculation processes.

When such arithmetic operations are performed by computers, a plurality of computers are employed to perform the operation processes in parallel to reduce the time duration for the operations. And when the plurality of computers perform the operation processes, the efficiencies of the data communication between the computers have a strong influence over the efficiency throughout the whole process.

In a parallel computing system used for High Performance Computing (HPC) and the like, each computer included in the system is referred to as node. In the parallel computing system, depending on the application software of the parallel computing, an all-to-all communication process may be performed in which each node obtains from the other nodes data corresponding to the own node number stored in the other nodes. The computer network between the nodes in the parallel computing system is referred to as interconnect (interconnection network). The topology of the interconnect includes for example a mesh-type topology and a torus-type topology. The mesh-type network is a network in which nodes are located on the grid points of the communication routes which are arranged in a grid pattern. In addition, the torus-type network is a network in which both ends of the node arrays arranged in a lateral direction and a longitudinal direction are connected together via transmission channels.

A variety of routes may be achieved for the mesh-type network and the torus-type network because there are a plurality of communication routes for one-to-one communication in the network. However, in the all-to-all communication, in which one-to-one communications are superposed, each node communicates with the nodes other than the own node. Therefore, wheneachnode selects a different type of route, anon-uniformity of the usage efficiencies of the communication routes may occur. Thus, for example, a technique as described in patent document 1 is employed in order to arrange each node to select a similar communication route to achieve the uniformity of the communication load.

Patent document 2 discloses a synchronization apparatus including a receiver, a transmitter, a receiving state register, a delay unit, and a controller in order to perform barrier synchronization in a parallel computer system.

### [Patent document]

[Patent document 1] Japanese Laid-Open Patent Publication No. 2011-53876
[Patent document 2] EP2466485 A1

### SUMMARY

In the above described technologies, each node communicates with a node which is located on similar relative coordinate in order to even out the loads to the communication routes. This presumes that when the links between the nodes share a communication route, each link evenly divides the communication band.

Although packet pacing is employed for evenly dividing the band, a state occurs in which packets with different hops flow in disorder due to the disturbances occurred in the actual hardware. Therefore, since the packet pacing does not function properly in some cases, the theoretically optimum communication is not actually completed within the optimum communication time duration.

Thus, it is an object of one aspect of the technique disclosed herein to provide an information processing system and a controlling method of an information processing system for optimizing the communication efficiency.

The invention is defined in the independent claims. Optional embodiments are set out in the dependent claims.

### BRIEF DESCRIPTION OF THE DRAWINGS

FIG. 1 is a conceptual diagram of all-to-all communication;
FIG. 2 is a schematic diagram illustrating a two-dimensional mesh-type interconnect;
FIG. 3 is a schematic diagram illustrating a one-dimensional torus-type interconnect;
FIG. 4 is a schematic diagram illustrating a two-dimensional torus interconnect;
FIG. 5 is a schematic diagram illustrating the superposition of data communications between nodes in an interconnect;
FIG. 6 is a schematic diagram illustrating data communication between nodes in an interconnect;
FIG. 7 is a schematic diagram illustrating data communication between nodes in an interconnect;
FIG. 8 is a schematic diagram illustrating data communication between nodes in a one-dimensional torus-type interconnect;
FIG. 9 is a table illustrating timings of barrier synchronization in a three-dimensional interconnect;
FIG. 10 is a schematic configuration diagram illustrating the configuration of nodes and the connection relations between the nodes in an interconnect according to one embodiment;
FIG. 11 is a schematic block diagram illustrating functions of the nodes in the interconnect according to one embodiment;
FIG. 12A is a flowchart illustrating processes performed by the nodes in the interconnect according to one embodiment;
FIG. 12B is a flowchart illustrating processes performed by the nodes in the interconnect according to one embodiment;
FIG. 13 is a schematic diagram of communication patterns of the all-to-all communication in the interconnect according to one embodiment;
FIG. 14 is a schematic diagram of communication patterns of the all-to-all communication in the interconnect according to one embodiment;
FIG. 15 is a schematic diagram illustrating a three-dimensional torus-type interconnect according to one embodiment;
FIG. 16 is a schematic block diagram illustrating functions of nodes in an interconnect according to one embodiment;
FIG. 17A is a flowchart illustrating processes performed by the nodes in the interconnect according to one embodiment;
FIG. 17B is a flowchart illustrating processes performed by the nodes in the interconnect according to one embodiment; and
FIG. 17C is a flowchart illustrating processes performed by the nodes in the interconnect according to one embodiment

### DESCRIPTION OF EMBIDOMENTS

First, a comparative example of amethodof controlling communications according to one embodiment is described with reference to the drawings.

### (Comparative Example)

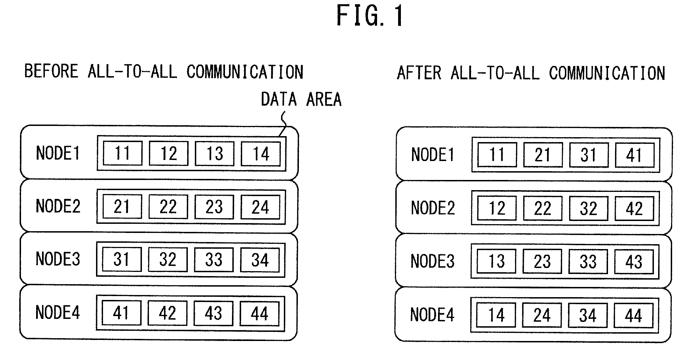

FIG. 1 is a schematic diagram illustrating an all-to-all communication. In FIG. 1, as an example, four nodes (nodes 1 to 4) form a mesh-type interconnect. A node is a device which transmits data in the all-to-all communication. An interconnect is a network in which a plurality of nodes are connected with each other and communications between the nodes are achieved. The nodes which form the interconnect include computers, telephones and other various devices. Additionally, a communication sub-system for a high performance parallel computer is sometimes referred to as interconnect.

The interconnect employs a variety of forms. Each form is referred to as network topology. The network topologies are generally divided into four types of forms including, namely, so-called direct network, indirect network, shared-media network and hybrid network. Although a direct network is described here, the embodiments described below are not limited to the direct network. The direct network means a network in which individual nodes are connected via direct links. Normally, since the nodes may be connected with a plurality of links when routers are installed in the nodes, a variety of topologies and routings may be employed in the direct network.

In the all-to-all communication, the data transmitted from each node is divided into packets and then transmitted. In addition, the data reaches the destination node via a number of nodes. Routing determines the node group which relays the transmitted data. Each packet includes address information of the destination node and the relay processes are performed to each packet by routers included in the nodes on the communication routes. One communication route is used by a plurality of packets.

Each node is allocated with a number which identifies each node. Additionally, each node includes a data area. The data area is divided into areas according to the number of nodes in the interconnect. Each divided area corresponds to a node number.

As illustrated in FIG. 1, node 1 includes data 11, 12, 13 and 14 in the four data areas before an all-to-all communication is performed. The data 11 is data for transmitting from node 1 to node 1, that is, data transmitted to the own node. The data 12 is data for transmitting from node 1 to node 2. In addition, the other data such as data 13, 14 and 21 and so on mean the same correspondence relations as described above. Each data is transferred the corresponding node. Therefore, as illustrated in FIG. 1, after the all-to-all communication is performed, the data storage locations in the data area in each node after the data transfer correspond to the node numbers of the originating nodes. The all-to-all communication may be employed when a matrix transpose and a fast Fourier transform and the like are performed in a parallel computer which includes a plurality of nodes.

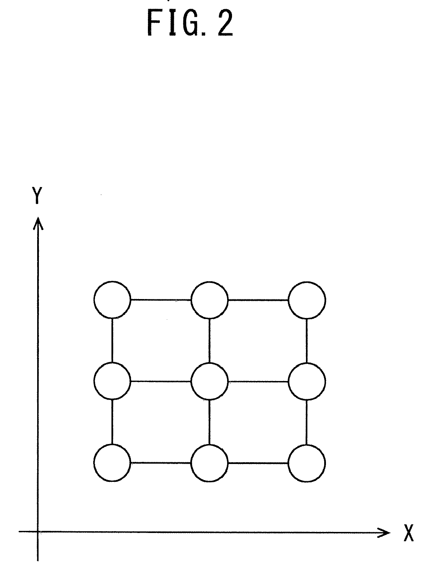

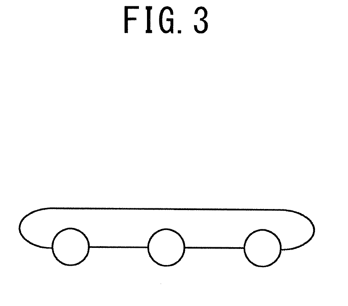

FIGS. 2 to 4 illustrate typical examples of the configurations and connections of the nodes in a two-dimensional mesh-type interconnect, a one-dimensional torus-type interconnect and a two-dimensional torus-type interconnect. In the two-dimensional mesh-type interconnect as illustrated in FIG. 2, nodes are provided on the grid points of the grid on the plane and adjacent nodes are connected with each other. In the one-dimensional torus-type interconnect as illustrated in FIG. 3, nodes are arranged in series and adjacent nodes are connected with each other. In addition, the nodes at both ends are also connected with each other. In the two-dimensional torus-type interconnect is seen as an interconnect in which the two-dimensional mesh-type interconnect and the one-dimensional torus-type interconnect are integrated. That is, similar to the two-dimensional mesh-type interconnect, each node is provided on a grid point of the grid on the plane and adjacent nodes are connected with each other. Further, similar to the one-dimensional torus-type interconnect, the nodes at both ends among the nodes connected in series are connected with each other in the vertical and horizontal direction.

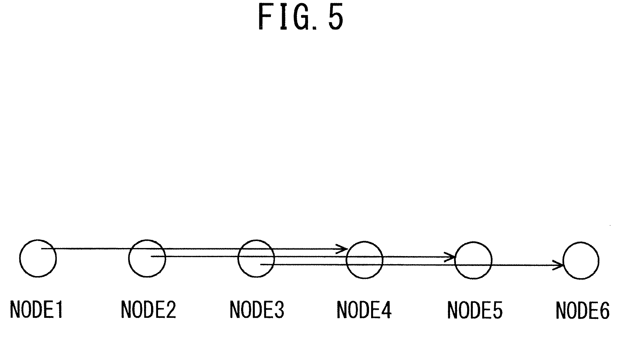

Next, a case in which a superposition of the communication occurs on a communication route is described with reference to the drawings. FIG. 5 illustrates a typical case of data transfer between nodes in an all-to-all communication as an example. In FIG. 5, nodes 1 to 6 are arranged in series and adjacent nodes are connected with each other. Here, a focus is put on the nodes 1 to 3 and each node transfers data to a node three hops ahead from each node. Here, the number of hops means the number of nodes which the data goes through to reach the destination node. Further, the connection between nodes in one hop is referred to as link. For example, when each node transfers data to an adjacent node, the number of hops is one and the number of links is one. FIG. 5 illustrates a case in which each node performs a data transfer with three hops.

In FIG 5, an all-to-all communication is performed and each node 1 to 3 transmits data. And then the communication routes from the node 1 to the node 4, from the node 2 to the node 5 and from the node 3 to the node 6 overlaps between the node 2 and the node 5. The overlapping communication route is referred to as a communication superposition or a link superposition. In the case as illustrated in FIG. 5, the degree of communication or link superposition on the communication routes between the node 3 and the node 4 is higher than the degrees of communication or link superposition on the communication routes between other nodes. When a communication superposition occurs on a communication route, the network band is divided among the superposed communication routes. Thus, a communication scheme in which information is divided intopackets and transmitted on the network is employed for an interconnect in HPC.

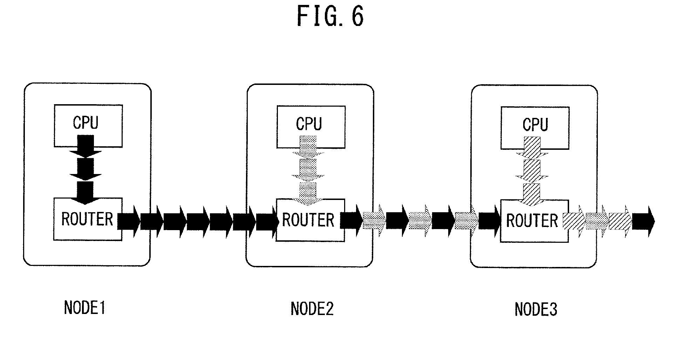

However, a packet is held on a communication route due to the disturbance of the communication route and the properties of the band division schemes employed in the network devices which construct nodes and the like in the interconnect. In this case, the fairness of the band division between links is not achieved at the part in which the communication superposition occurs. As an example, FIG. 6 illustrates a case in which three nodes (nodes 1 to 3) are connected in series. Packets transmitted from the node 1 are transferred to a node subsequent to the node 3 via the nodes 2 and 3. Packets transmitted from the node 2 are transferred to a node subsequent to the node 3 via the node 3. Packets transmitted from the node 3 are transferred to a node subsequent to the node 3. A CPU and a router are illustrated as network devices which form each node in FIG. 6.

Each node divides the band to evenly adjust between packets transmitted from the CPU in the node and packets transferred from the outside of the node. Therefore, when a focus is put on the node 3, 50 % of packets transmitted from the node 3 are formed by packets transmitted from the CPU of the node 3. And the remaining 50 % are formed by packets transferred from the outside of the node 3, that is, packets transmitted from the CPU of the node 1 and packets transmitted from the CPU of the node 2. Therefore, as illustrated in FIG. 6, the ratio of the packets transmitted from the CPU of the node 3 occupying the communication route subsequent to the node 3 becomes higher than the ratio of the other packets. As a result, the band for the communication route is not evenly shared among the packets transmitted from the nodes 1 to 3.

Moreover, the explanations are given for a case in which the nodes 1 to 3 illustrated in FIG. 6 are used to form a one-dimensional torus-type interconnect as illustrated in FIG. 3. And, when each node evenly adjust between packets transmitted from the CPU of the own node and packets transferred from the outside of the own node as described above, a deadlock occurs on the communication route. The deadlock is a phenomenon in which among nodes mutually transmitting data a data transmitting process performed by a node tries to access a resource occupied by another node, the process does not release the own resource since the request from the another node is not completed, and thenawaiting state continues. Inorder toprevent the deadlock, the packets are prioritized intentionally for transfer as an example. However, when the packets are prioritized, the even band division among the packets is not achieved on the communication route.

In order to prevent such a circumstance, a packet pacing technique is known that a waiting time is intentionally set to each transmission of packet and the traffic is smoothed to ensure the fairness of the band division. In the all-to-all communication, a link is used by turns between the packets without interferences with the other packets by setting a non-transmission period which is longer than the time used for a link transfer of "[(the number of hops) - 1] x (the packet length) "when a node transmits a packet. Here, the time to wait for a link transfer of n packets when packets are transmitted is defined as an intra-packet gap (= n; n >= 0). In addition, when the intra-packet gap is set to 0, packets are sequentially transmitted. When the number of hops increases due to the increase of the number of nodes in the interconnect, it is thought that the degree of the communication congestion also increases.

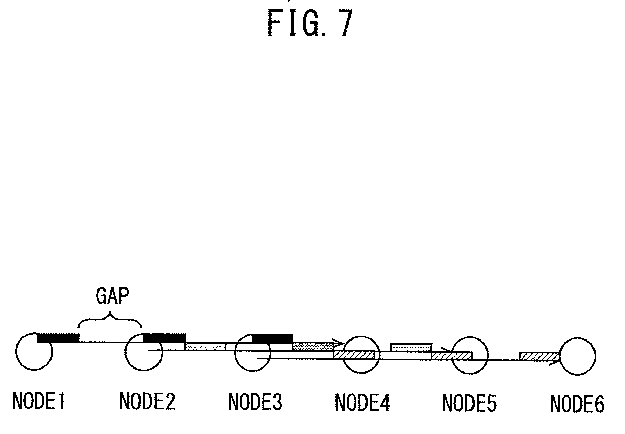

An example of the packet pacing is described with reference to FIG. 7. Similar to FIG. 6, FIG. 7 illustrates that the nodes 1 to 6 are arranged in series. In the interconnect as illustrated in FIG. 7, each node sets the packet transmission interval to "(the number of hops between the originating node and the destination node) - 1". Therefore, the packet waiting state is prevented on the communication route in which a communication superposition occurs. As a result, the time for completing the all-to-all communication is reduced.

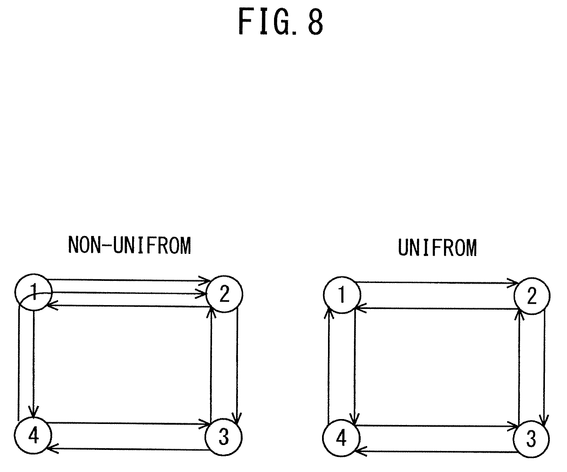

Incidentally, since there are a plurality of communication routes for one-to-one communication in the mesh-type interconnect or the torus-type interconnect, a variety of routes may be employed. However, in the all-to-all communication, which is formed by the superposition of one-to-one communication, each node communicates with the other nodes in the interconnect. Thus, when each node employs non-similarity routes, non-uniformity of the usage efficiencies of the communication routes may occur. Thus, uniformity of the load is achieved when each node employs similarity routes. The uniformity of the load is described with reference to FIG. 8.

FIG. 8 illustrates a one-dimensional torus-type interconnect with four nodes. The diagram (indicated by "uniform") on the right hand side in FIG. 8 illustrates that the load is evenly put on each communication route. To the contrary, the diagram (indicated by "non-uniform") on the left hand side in FIG. 8 illustrates that a greater load is put on the communication route between the node 1 and the node 2. This is because a communication route from the node 4 to the node 2 through the node 1 and the patterns of communication routes are not relatively similar.

Therefore, each node communicates with a node which is located on a relatively similar coordinate in order to evenly divide the load on the communication route. This assumes that when a communication route is shared among packets the band is evenly divided for the packets. Therefore, the packet pacing is employed for evenly dividing the band.

A configuration is proposed in which barrier synchronization is employed so that the processors keep pace with each other and packets with the same number of hops flow on the interconnect in order to improve the tolerance of disturbances on the communication routes. Here, the barrier synchronization is a synchronization which is performed for each node to confirm with each other that each node completes a given process when a plurality of nodes perform a parallel program in parallel in the interconnect. In the barrier synchronization, the nodes to be synchronized mutually notify that the own node reaches a certain stage called a barrier in the parallel program. And then the parallel program proceeds with the process to the subsequent stage after it is confirmed that each node participating in the barrier synchronization reaches the barrier stage.

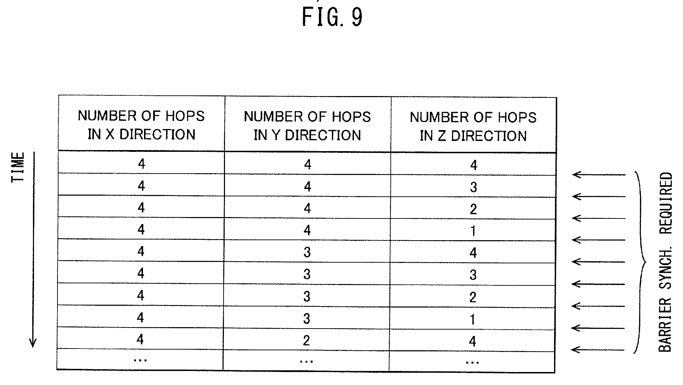

FIG. 9 illustrates an example of a timing of performing the barrier synchronization in a three-dimensional interconnect. The interconnect as illustrated in FIG. 9 is a so-called three-dimensional mesh-type interconnect or three-dimensional torus-type interconnect, in which nodes are arranged in a coordination system with X, Y and Z axes. Each row in the table in FIG. 9 represents one data transfer in the all-to-all communication. That is, in the data transfer indicated on the top row of the table in FIG. 9, in which "the number of hops in the X-axis direction", "the number of hops in the Y-axis direction" and "the number of hops in the Z-axis direction" are respectively "4", the data is transferred from the own node to a node which is located four hops ahead from the own node in the X-axis direction, Y-axis direction and Z-axis direction.

As illustrated in FIG. 9, the data is transferred with decreasing "the number of hops in the Z-axis direction" by one on completion of each transmission in the comparative example. That is, the barrier synchronization is performed each time "the number of hops in Z-axis direction" is changed. Thus, since the number of barrier synchronizations is large, the throughput of the communication routes is likely to be deteriorated.

Then, with the descriptions for the comparative example in mind, a communication controlling method of a parallel computing system according to one embodiment is described below with reference to the drawings.

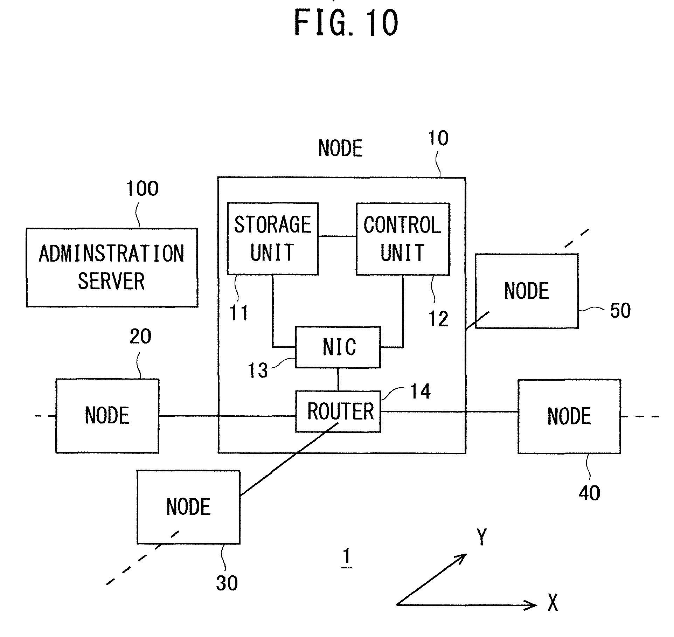

FIG. 10 is a schematic configuration diagram illustrating a configuration and connection relations of nodes in a interconnect of a parallel computing system 1 according to one embodiment. The parallel computing system 1 is an example of an information processing system. FIG. 10 illustrates a administration server 100 and five nodes 10, 20, 30, 40 and 50 which are included in the parallel computing system 1. The nodes 10, 20, 30, 40 and 50 are examples of information processing apparatuses. In addition, the X-axis and the Y-axis, which are at right angles to each other, are set as illustrated in FIG. 10. As illustrated in FIG. 10, the node 10 includes a storage unit 11, a control unit 12, an NIC (Network Interface Card) 13 and a router 14. Since the configurations of the nodes 20, 30, 40 and 50 are similar to that of the node 10, the configurations of these nodes are not illustrated. In the following, descriptions are given to the node 10.

The operations of the node 10 are controlled by the control unit 12. The control unit 12 determines data to be transferred in the interconnect, determines the timing and the like for transferring the data and performs barrier synchronizations with each node in the interconnect. The control unit 12 is connected with the storage unit 11 and the NIC 13.

The storage unit 11 stores programs of the OS (Operating System) and application programs and the like, which are executed by the control unit 12. In addition, the storage unit 11 stores a variety of data used for processes performed by the control unit 12.

The NIC 13 transmits and receives data via the router 14 to and from the adj acent nodes in the interconnect. The router 14 is connected with the routers in the nodes 20, 30, 40 and 50, which are adjacent to the node 10, via high-speed transmission routes. The NIC 13 is also connected with the administration server 100 via a transmission route (not illustrated) and performs data communications with the administration server. The administration server 100 provides job execution instructions related to the all-to-all communication to each node in the interconnect. Further, the administration server 100 notifies each node of the configuration information of the interconnect including the addresses which indicate the relative location of each node.

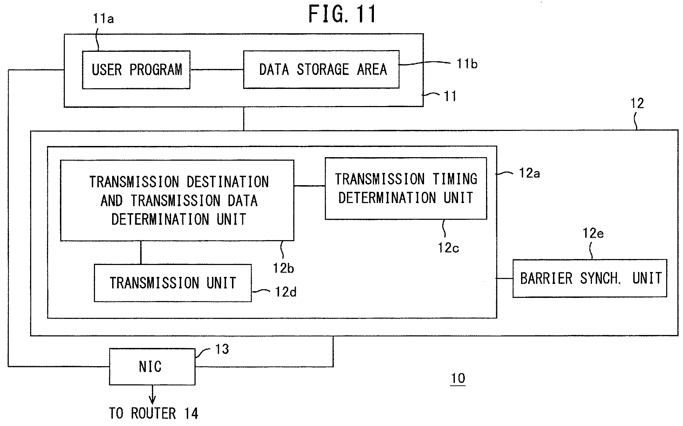

FIG. 11 is a block diagram schematically illustrating functions of the node 10. The storage unit 11 of the node 10 stores a user program 11a. The user program 11a is a program for transferring data in the all-to-all communication according to the job execution instructions received from the administration server. In addition, the storage unit 11 includes a data storage area 11b. The data storage area 11b is an example of a storage unit. The data storage area 11b stores data held by the node 10 itself and data transferred from the other nodes. The data storage area 11b is divided into areas by node. Further, each data includes an address of the destination node, to which the data is transferred. Therefore, each data is stored in the area dedicated for the node corresponding to the address in the data storage area 11b. That is, the data is stored by nodes included in the interconnect into the data storage area 11b.

The control unit 12 of the node 10 includes a transmission control unit 12a and a barrier synchronization unit 12e. In addition, the transmission control unit 12a includes a transmission destination and transmission data determination unit 12b, a transmission timing determination unit 12c and a transmission unit 12d. The transmission destination and transmission data determination unit 12b reads out the user program 11a stored in the storage unit 11. And the transmission destination and transmission data determination unit 12b executes the user program 11a to determine data to be transmitted from the node 10 and the transmission destination of the data based on the processing results. The transmission destination and transmission data determination unit 12b transmits the data to be transmitted to the transmission unit 12d on the basis of the data transmission timing determined by the transmission timing determination unit 12c. Incidentally, the transmission destination and transmission data determination unit 12b may be configured to include the transmission destination determination unit and the transmission data determination unit as separate processing units. The data transmitted to the transmission unit 12d is sent to the NIC 13. The NIC 13 transmits the data via the router 14 to the router of the adjacent node which is connected with the router 14. The details of the processes performed by each unit are described later.

Two examples according to the present embodiment are described below.

### (Example 1)

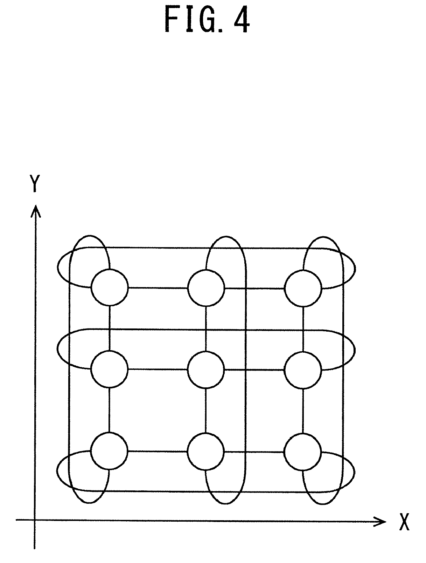

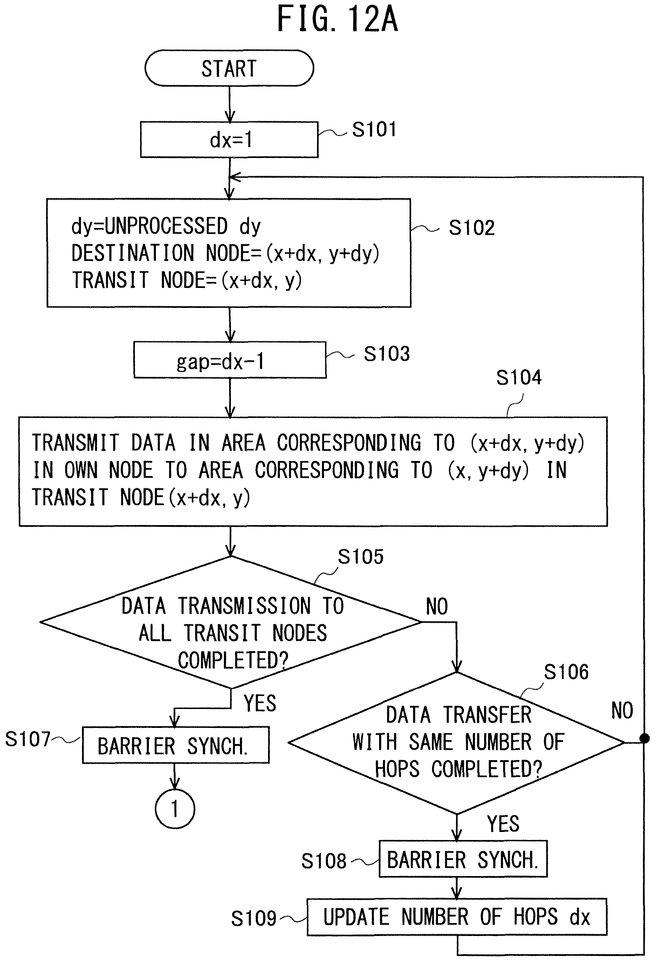

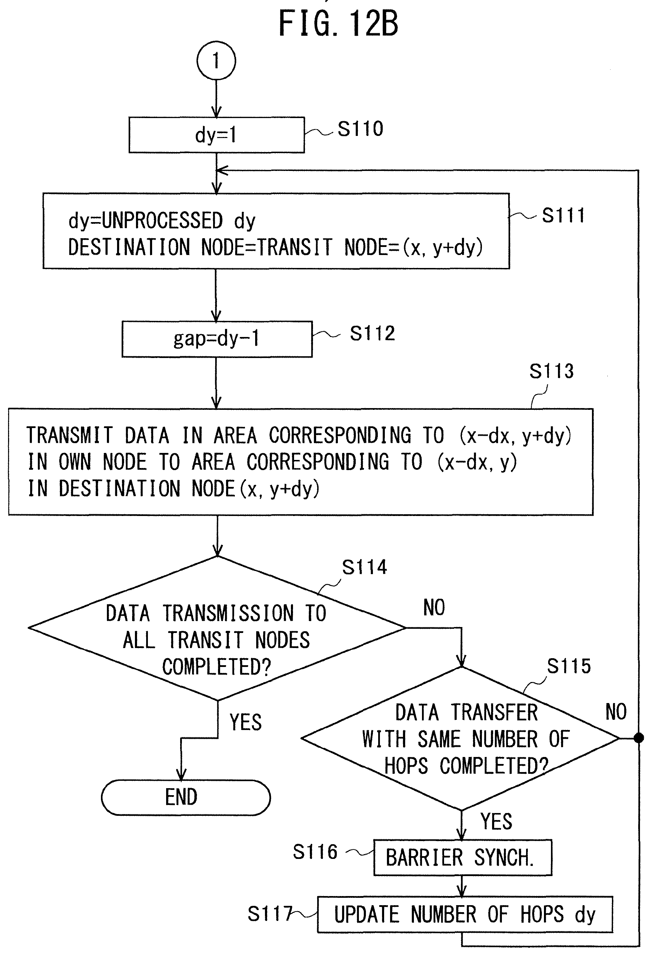

In the present example, the descriptions are given to the all-to-all communication when an interconnect is formed by two-dimensional torus as illustrated in FIG. 4. The configuration of each node is the same as the configuration as illustrated in FIGS. 10 and 11. Thus, each node is described with reference to FIGS. 10 and 11 in the present example. FIGS. 12A and 12B illustrate flowcharts of processes performed by each node in the present example. In the present example, each node in the interconnect as illustrated in FIG. 4 is provided with the coordinate of the own node in the interconnect. In the following descriptions, "x" denotes the location (X-coordinate) in the X-axis direction, "y" denotes the location (Y-coordinate) in the Y-axis direction and "node (x, y) "denotes a node located on the coordinate (x, y). Each node performs the processes in the flowchart as illustrated in FIGS. 12A and 12B when the node receives an instruction of the initiation of the all-to-all communication from the administration server 100.

First, in S101, the transmission destination and transmission data determination unit 12b of the node (x, y) sets the number of hops dx in the X-axis direction for the data transfer to 1. Next, the process proceeds to S102. In S102, the transmission destination and transmission data determination unit 12b sets the number of hops which has not been employed for the data transmission process among the number of hops dy used for data transmission in the Y-axis direction to the value of dy. And then the transmission destination and transmission data determination unit 12b selects the node(x + dx, y) as a transit node for the data of which the destination is the node (x + dx, y + dy) among the data stored in the data storage area 11b in the own node.

Next, in S103, the transmission timing determination unit 12c sets the intra-packet gap for data transmission to dx - 1 (gap = dx - 1) according to the number of hops dx for data transmission in the X-axis direction. Since the intra-packet gap is described in the paragraph 0023 , the detailed descriptions are omitted here. Next, the process proceeds to S104.

In S104, the transmission destination and transmission data determination unit 12b performs data transmission based on the intra-packet gap set by the transmission timing determination unit 12c in S103. Specifically, the transmission destination and transmission data determination unit 12b transmits the data of which the destination is the node (x + dx, y + dy) among the data stored in the data storage area 11b to the node(x + dx, y), which is the transit node. The node(x + dx, y) receives the data transmitted via the router 14 and the NIC 13 from the node (x, y). And, the node (x + dx, y) stores the received data in the area for which the destination is the node(x, y + dy) in the data storage area 11b of the node(x + dx, y).

In S105, the transmission destination and transmission data determination unit 12b determines whether or not the data transmission to the above transit node is completed for the values of dx available for the all-to-all communication in the interconnect. When there is data which has not been transmitted to the transit node (x + dx, y) in the data storage area 11b in the own node (S105: No), the transmission destination and transmission data determination unit 12b proceeds with the process to S106.

In S106, the transmission destination and transmission data determination unit 12b determines whether or not the data transfer for the number of hops dx in the X-axis direction is completed. In the interconnect in the present example, the number of data transmissions with the same number of hops dx in the X-axis direction corresponds to the number of hops dy in the Y-axis direction. Therefore, the processes of S102 to S104 as described above are repeated by fixing the number of hops dx in the X-axis direction and changing the number of hops dy in the Y-axis direction. As a result, the data transmission with the same number of hops dx in the X-axis direction is performed collectively.

Thus, when there is data with the number of hops dy in the Y-axis direction for which the data transmission processes have not been performed in S102 to S104 among the data to be transmitted with the above number of hops dx in the X-axis direction (S106: No), the transmission destination and transmission data determination unit 12b returns the process from S106 to S102.

Further, when the steps from S102 to S104 are repeated and the data transmission with the number of hops dx in the X-axis direction are completed for the possible number of hops dy in the Y-axis direction (S106: Yes), the transmission destination and transmission data determination unit 12b proceeds with the process to S108.

In S108, the transmission control unit 12a instructs performing a barrier synchronization to the barrier synchronization unit 12e. When the barrier synchronization unit 12e of each node performs a barrier synchronization, the nodes in the interconnect perform together the barrier synchronization of S108 and the update of the number of hops dx in the X-axis direction of S109. In S109, the transmission destination and transmission data determination unit 12b updates the number of hops dx in the X-axis direction to the number of hops in the X-axis direction for which the data transmission has not been performed in S102 to S104. As long as the data transmissions to the transit nodes for the possible numbers of dx in the all-to-all communication in the interconnect are completed, the method of updating the number of hops is arbitrarily defined to perform the process of S109. When the number of hops dx in the X-axis direction is updated in S109, the transmission destination and transmission data determination unit 12b returns the process to S102. And when the number of hops dx in the X-axis direction is updated in S109, the transmission destination and transmission data determination unit 12b uses the updated number of hops dx in the X-axis direction to perform the processes of S102 to S106 for each possible number of hops dy in the Y-axis direction.

When the processes of S102 to S106, S108 and S109 as described above are repeated, the data to be transmitted to the node (x + dx, y + dy) is stored in the data area corresponding to the node (x, y + dy) in the data storage area 11b of the node (x + dx, y) for each number of hops dx and dy. Thus, when the data transmissions in the X-axis direction from each node are completed (S105: Yes), the transmission destination and transmission data determination unit 12b proceeds with the process to S107 and performs a barrier synchronization. In addition, the transmission destination and transmission data determination unit 12b proceeds with the process to S110 as illustrated in FIG. 12B.

In S110, the transmission destination and transmission data determination unit 12b of each node initially sets the number of hops dy in the Y-axis direction to 1. Subsequently, the transmission destination and transmission data determination unit 12b proceeds with the process to S111. In S111, the transmission destination and transmission data determination unit 12b sets the number of hops dx in the X-axis direction to the number of hops with which the data transmission has not been performed since the process of S110 is performed. And then the transmission destination and transmission data determination unit 12b selects the node (x, y + dy) as the transit node for the data of which the destination is the node(x, y + dy) among the data stored in the data storage area 11b in the own node. That is, the target node and the transit node is the same node(x, y + dy).

Next, in S112, the transmission timing determination unit 12c sets the intra-packet gap of the data transmission to dy - 1 (gap = dy - 1) according to the number of hops dy in the Y-axis direction of the data transmission. And then the process proceeds to S113.

In S113, the transmission destination and transmission data determination unit 12b transmits data according to the intra-packet gap set by the transmission timing determination unit 12c in S112. Specifically, the transmission destination and transmission data determination unit 12b transmits the data stored in the area for the node(x - dx, y + dy) among the data stored in the data storage area 11b to the node (x, y + dy), which is the target node. The node (x, y + dy) receives the data which is transmitted via the router 14 and the NIC 13 from the node (x, y). And the node (x, y + dy) stores the received data in the area corresponding to the node (x - dx, y) in the data storage area 11b of the node(x, y + dy).

In S114, the transmission destination and transmission data determination unit 12b determines whether or not the data transmissions to the transit nodes as described above are completed for the possible dy in the all-to-all communication in the interconnect. When there is data which has not been transmitted to the target node (x, y + dy) in the data storage area 11b in the own node (S114 : No), the transmission destination and transmission data determination unit 12b proceed with the process to S115.

In S115, the transmission destination and transmission data determination unit 12b determines whether or not the transfer with the same number of hops dy in the Y-axis direction is completed. In the present example, the number of hops dy in the Y-axis direction is fixed, the number of hops dx in the X-axis direction is changed and the processes of S 111 to S113 as described above are repeated. In this way, the data transmissions with the same number of hops dy in the Y-axis direction are performed collectively.

Therefore, when the data transmission has not been performed for one of the number of hops dx in the X-axis direction in S111 to S113 for the data to be transmitted with the number of hops dy in the Y-axis direction (S115: No), the transmission destination and transmission data determination unit 12b returns the process from S115 to S111.

Additionally, when the processes of S111 to S113 are repeated to complete the data transmission with the possible number of hops dx in the X-axis direction for the data to be transmitted with the number of hops dy in the Y-axis direction (S115: No), the transmission destination and transmission data determination unit 12b proceeds with the process to S116.

In S116, the transmission control unit 12a instructs performing a barrier synchronization to the barrier synchronization unit 12e. When the barrier synchronization unit 12e of each node performs the barrier synchronization, the nodes in the interconnect perform together the barrier synchronization of S116 and the update of the number of hops dx in the X-axis direction of S117. In S117, the transmission destination and transmission data determination unit 12b updates the number of hops dy in the Y-axis direction to the number of hops in the Y-axis direction for which the data transmission has not been performed in S111 to S113. As long as the data transmissions to the transit nodes for the possible numbers of dy in the all-to-all communication in the interconnect are completed, the method of updating the number of hops is arbitrarily defined to perform the process of S117. When the number of hops dy in the Y-axis direction is updated in S117, the transmission destination and transmission data determination unit 12b returns the process to S111. And when the number of hops dy in the Y-axis direction is updated in S117, the transmission destination and transmission data determination unit 12b uses the updated number of hops dy in the Y-axis direction to perform the processes of S111 to S113 for each possible number of hops dx in the X-axis direction.

When each node repeats the processes of S111 to S117, the data to be transmitted to the node (x + dx, y + dy) is stored in the data area corresponding to the node(x, y) in the data storage area 11b of the node (x + dx, y + dy). In this way, when the data transmissions in the Y-axis direction from each node are completed (S114: Yes), the all-to-all communication is completed in the present example.

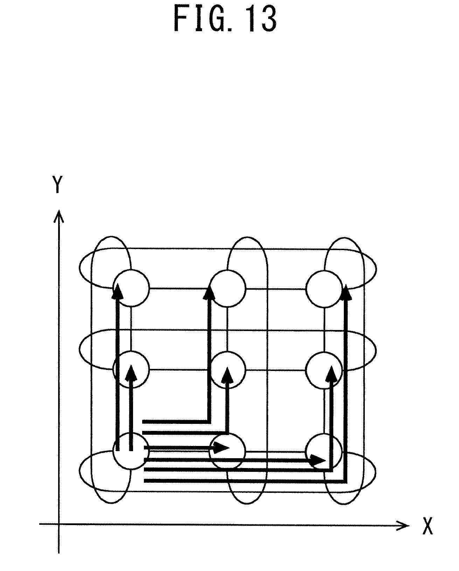

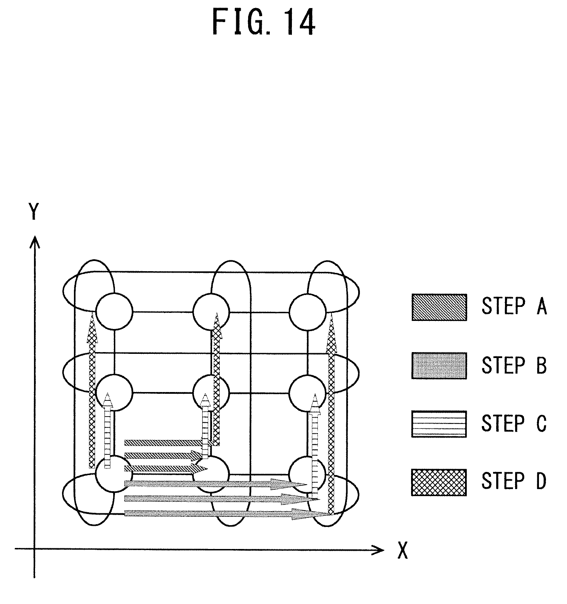

FIGS. 13 and 14 illustrate schematic diagrams of the communication patterns in the all-to-all communication in the present example. In FIGS. 13 and 14, a focus is put on the node in the lowest left in the interconnect and the communication patterns of the data transmitted from the node are illustrated. As illustrated in FIG. 13, in the present example, the data transmissions in the X-axis direction are initially performed for the data to be transmitted, and then the data transmissions in the Y-axis direction are performed. And then, as illustrated in FIG. 14, when the processes are performed according to the flowchart as described above and the process of each step as illustrated in FIG. 12A, the data transmissions in the X-axis direction as indicated by Step A and Step B are performed. Namely, as indicated by Step A and Step B, the data transfers with the same number of hops (dx) are performed collectively. In addition, when the process of each step as illustrated in FIG. 12A is performed, the process proceeds from S107 to S110 and the process of each step as illustrated in FIG. 12B is performed, the data transmissions in the Y-axis direction as indicated by Step C and Step D are performed. Similar to Step A and Step B, the data transfers with the same number of hops (dy) are performed collectively in Step C and Step D.

In the present example as described above, the data transmission routes from the originating node to the destination node are divided according to time-sharing. And the data transmissions in the same direction and with the same number of hops are performed collectively. With this configuration, the packets to be transmitted with different numbers of hops are not mixed in the interconnect. Further, since the number of barrier synchronizations are reduced in the all-to-all communication, the overhead of the data transmissions due to the barrier synchronizations are reduced and the performance of the data transmission in the all-to-all communication is improved.

### (Example 2)

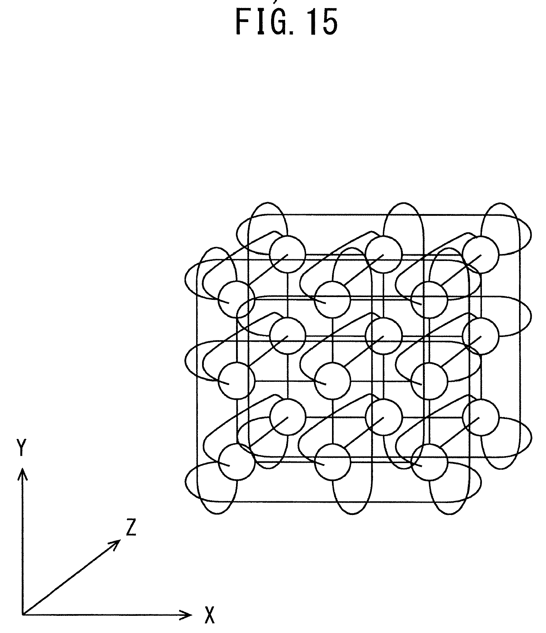

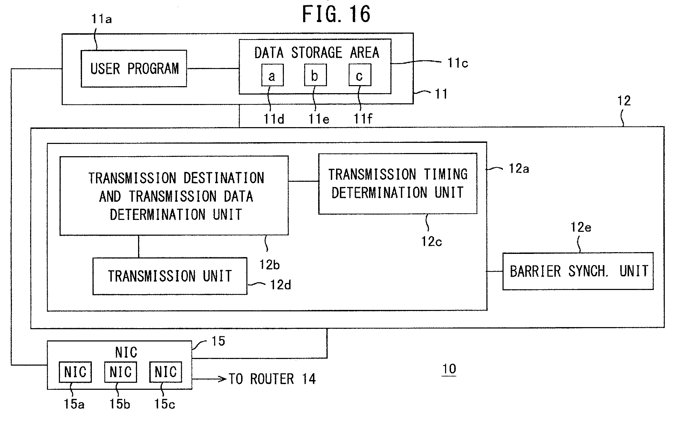

In the present example, the descriptions are given to the all-to-all communication when an interconnect is formed by three-dimensional torus as illustrated in FIG. 15. As illustrated in FIG. 16, the configuration of each node is the same as the configuration as illustrated in FIGS. 10 and 11, except that a different configuration is employed for the data storage area 11c and the NIC 15 includes three NICs, NIC 15a and NIC 15b and NIC 15c. Thus, in the present example, the same numbers are assigned to the same elements as in FIGS. 10 and 11 and the descriptions of the elements are omitted here.

Similar to the data storage area 11b, the data storage area 11c stores the data stored in the node 10 itself and the data transferred from the other nodes. In the data storage area 11c, the area divided according to the nodes in the interconnect. Further, each area which is divided according to node is divided into three areas, which are the area a 11d, the area b 11e and the area c 11f. For convenience of description, the area a 11d, the area b11e and the area c 11f are respectively referred to as the area a, the area b and the area c in the descriptions below. In addition, similar to Example 1 as described above, each data includes the address of the destination node, to which the data is transferred. Moreover, each data is stored in the area for the node corresponding to the address in the data storage area 11c.

Additionally, the NICs 15a to 15c include the same function as the NIC 13 in FIG. 11. The data transmissions in the X-axis direction are allocated to the NIC 15a, the data transmissions in the Y-axis direction are allocated to the NIC 15b and the data transmissions in the Z-axis direction are allocated to the NIC 15c.

In the data transmissions in the interconnect in the present example, each node may simultaneously transmit the data in each axis direction of X, Y and Z axes. Therefore, the data to be transmitted is divided into a plurality of pieces of data and the data transmissions are performed so that each piece of data is transmitted via a different route to reach the target node.

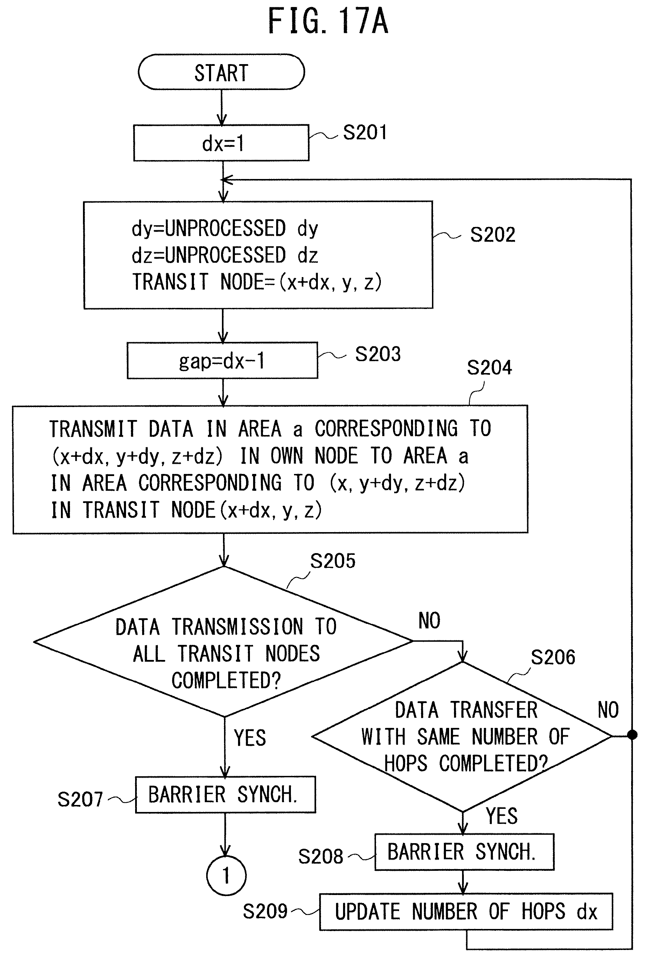

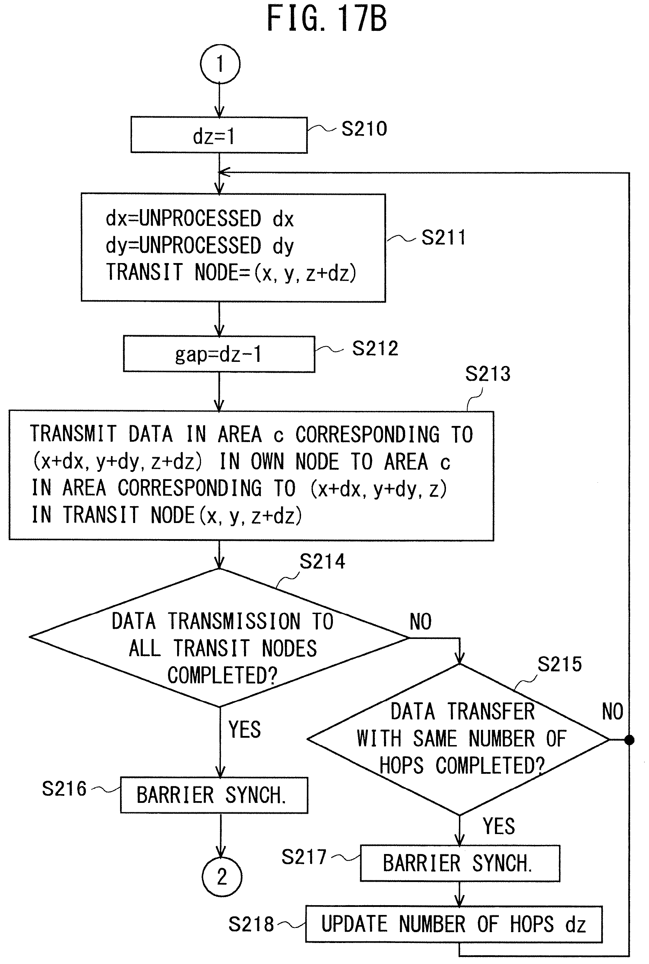

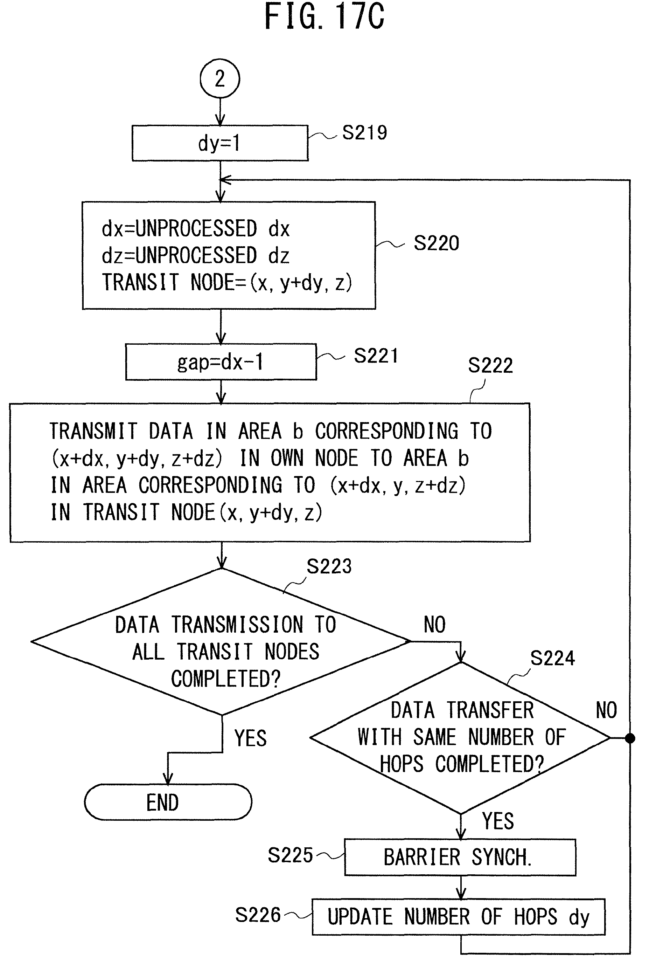

FIGS. 17A to 17C illustrate flowcharts of the processes performed in the present example. In the present example, each node in the interconnect as illustrated in FIG. 15 is assigned with the coordinate of the own node in the interconnect. In the following descriptions, similar to Example 1, x denotes the location in the X-axis direction (X-coordinate), y denotes the location in the Y-axis direction (Y-coordinate) and z denotes the location in the Z-axis direction (Z-coordinate) and the node located on the coordinate (x, y, z) is referred to as "node (x, y, z)". Each node performs the processes in the flowcharts as illustrated in FIGS. 17A, 17B and 17C when the node receives an initiation instruction of the all-to-all communication from the administration server.

The processes of S201 to S209 as described below are performed by the NIC 15a. Firstly, in S201, the transmission destination and transmission data determination unit 12b of the node (x, y, z) sets the number of hops dx for data transmission in the X-axis direction to 1. Next, the process proceeds to S202. In S202, the transmission destination and transmission data determination unit 12b sets the number of hops for data transmission in the Y-axis direction and Z-axis direction to the number of hops dy and dz with which the data transmissions have not been performed. And the transmission destination and transmission data determination unit 12b selects the node (x + dx, y, z) as the transit node for the data stored in the area a of the area for the node(x + dx, y + dy, z + dz) among the data stored in the data storage area 11c in the own node.

Next, in S203, the transmission timing determination unit 12c sets the intra-packet gap for data transmission to dx - 1 (gap = dx - 1) according to the number of hops dx for data transmission in the X-axis direction. And then the process proceeds to S204.

In S204, the transmission destination and transmission data determination unit 12b performs data transmission based on the intra-packet gap set by the transmission timing determination unit 12c in S203. Specifically, the transmission destination and transmission data determination unit 12b transmits the data which is stored in the area a of the area for the node (x + dx, y + dy, z + dz) among the data stored in the data storage area 11c to the node (x + dx, y, z), which is the transit node, via the NIC 15a and the router 14. The node (x + dx, y, z) receives the data transmitted via the router 14 and the NIC 15a from the node (x, y, z). And, the node (x + dx, y, z) stores the received data in the area a of the area for which the destination is the node(x, y + dy, z + dz) in the data storage area 11c in the node (x + dx, y, z).

In S205, the transmission destination and transmission data determination unit 12b determines whether or not the data transmission to the above transit node is completed for the values of dx available for the all-to-all communication in the interconnect. When there is data which has not been transmitted to the transit node (x + dx, y, z) in the data storage area 11b in the own node (S205 : No), the transmission destination and transmission data determination unit 12b proceeds with the process to S206.

In S206, the transmission destination and transmission data determination unit 12b determines whether or not the data transfer for the number of hops dx in the X-axis direction is completed. In the present example, the processes of S202 to S204 as described above are repeated by fixing the number of hops dx in the X-axis direction and changing the number of hops dy in the Y-axis direction and the number of hops dz in the Z-axis direction. As a result, the data transmission with the same number of hops dx in the X-axis direction is performed collectively.

Thus, when there is data with the number of hops dy in the Y-axis direction or the number of hops dz in the Z-axis direction for which the data transmission processes have not been performed in S202 to S204 among the data to be transmitted with the above number of hops dx in the X-axis direction (S206: No), the transmission destination and transmission data determination unit 12b returns the process from S206 to S202.

Further, when the steps from S202 to S204 are repeated and the data transmissions with the number of hops dx in the X-axis direction are completed for the possible number of hops dy in the Y-axis direction and the possible number of hops dz in the Z-axis direction (S206: Yes), the transmission destination and transmission data determination unit 12b proceeds with the process to S208.

In S208, the transmission control unit 12a instructs performing a barrier synchronization to the barrier synchronization unit 12e. When the barrier synchronization unit 12e of each node performs a barrier synchronization, the nodes in the interconnect perform together the barrier synchronization of S208 and the update of the number of hops dx in the X-axis direction of S209. In S209, the transmission destination and transmission data determination unit 12b updates the number of hops dx in the X-axis direction to the number of hops in the X-axis direction for which the data transmission has not been performed in S202 to S204. Similar to Example 1, as long as the data transmissions to the transit nodes for the possible numbers of dx in the all-to-all communication in the interconnect are completed, the method of updating the number of hops is arbitrarily defined to perform the process of S209. When the number of hops dx in the X-axis direction is updated in S209, the transmission destination and transmission data determination unit 12b returns the process to S202. And the transmission destination and transmission data determination unit 12b uses the updated number of hops dx in the X-axis direction to perform the processes of S202 to S206 for each possible number of hops dy in the Y-axis direction and each possible number of hops dz in the Z-axis direction.

When the processes of S202 to S206, S208 and S209 are repeated, the data stored in the area a among the data to be transmitted to the node(x + dx, y + dy, z + dz) is stored in the area a of the data area corresponding to the node (x , y + dy, z + dz) in the data storage area 11c in the node(x + dx, y, z) for each number of hops dx, dy and dz. Thus, when the data transmissions in the X-axis direction from each node are completed (S205: Yes), the transmission destination and transmission data determination unit 12b proceeds with the process to S207 to perform a barrier synchronization. Further, the transmission destination and transmission data determination unit 12b proceeds with the process to S210 in FIG. 17B.

In S210, the transmission destination and transmission data determination unit 12b sets the number of hops dz for data transmission in the Z-axis direction to 1. Next, the process proceeds to S211. In S211, the transmission destination and transmission data determination unit 12b sets the number of hops dx for data transmission in the X-axis direction and the number of hops dy for data transmission in the Y-axis direction to the number of hops dx and dy for which the data transmission has not been performed. And then the transmission destination and transmission data determination unit 12b selects the node (x, y, z + dz) as the transit node for the data stored in the area c of the area for the node(x + dx, y + dy, z + dz) among the data stored in the data storage area 11c in the own node.

Next, in S212, the transmission timing determination unit 12c sets the intra-packet gap for data transmission to dz - 1 (gap = dz - 1) according to the number of hops dz for data transmission in the Z-axis direction. Next, the process proceeds to S213.

In S213, the transmission destination and transmission data determination unit 12b performs data transmission based on the intra-packet gap set by the transmission timing determination unit 12c in S212. Specifically, the transmission destination and transmission data determination unit 12b transmits the data which is stored in the area c of the area for the node (x + dx, y + dy, z + dz) among the data stored in the data storage area 11c to the node (x, y, z + dz), which is the transit node, via the NIC 15c and the router 14. The node (x, y, z + dz) receives the data transmitted via the router 14 and the NIC 15c from the node (x, y, z). And, the node(x, y, z + dz) stores the received data in the area a of the area for which the destination is the node (x + dx, y + dy, z) in the data storage area 11c in the node (x, y, z + dz).

In S214, the transmission destination and transmission data determination unit 12b determines whether or not the data transmission to the above transit node is completed for the values of dz available for the all-to-all communication in the interconnect. When there is data which has not been transmitted to the transit node (x, y, z + dz) in the data storage area 11b in the own node (S214:No), the transmission destination and transmission data determination unit 12b proceeds with the process to S215.

In S215, the transmission destination and transmission data determination unit 12b determines whether or not the data transfer for the number of hops dz in the Z-axis direction is completed. In the present example, the processes of S211 to S213 as described above are repeated by fixing the number of hops dz in the Z-axis direction and changing the number of hops dx in the X-axis direction and the number of hops dy in the Y-axis direction. As a result, the data transmission with the same number of hops dz in the Z-axis direction is performed collectively.

Thus, when there is data with the number of hops dx in the X-axis direction or the number of hops dy in the Y-axis direction for which the data transmission processes have not been performed in S211 to S213 among the data to be transmitted with the above number of hops dz in the Z-axis direction (S215: No), the transmission destination and transmission data determination unit 12b returns the process from S215 to S211.

Further, when the steps from S211 to S213 are repeated and the data transmissions with the number of hops dz in the Z-axis direction are completed for the possible number of hops dx in the X-axis direction and the possible number of hops dy intheY-axisdirection (S215:Yes), the transmission destination and transmission data determination unit 12b proceeds with the process to S217.

In S217, the transmission control unit 12a instructs performing a barrier synchronization to the barrier synchronization unit 12e. When the barrier synchronization unit 12e of each node performs a barrier synchronization, the nodes in the interconnect perform together the barrier synchronization of S217 and the update of the number of hops dz in the Z-axis direction of S218. In S218, the transmission destination and transmission data determination unit 12b updates the number of hops dz in the Z-axis direction to the number of hops in the Z-axis direction for which the data transmission has not been performed in S211 to S213. Similar to Example 1, as long as the data transmissions to the transit nodes for the possible numbers of dz in the all-to-all communication in the interconnect are completed, the method of updating the number of hops is arbitrarily defined to perform the process of S218. When the number of hops dz in the Z-axis direction is updated in S218, the transmission destination and transmission data determination unit 12b returns the process to S211. And the transmission destination and transmission data determination unit 12b uses the updated number of hops dz in the Z-axis direction to perform the processes of S211 to S215 for each possible number of hops dx in the X-axis direction and each possible number of hops dy in the Y-axis direction.

When the processes of S211 to S215, S217 and S218 are repeated, the data stored in the area c among the data to be transmitted to the node(x + dx, y + dy, z + dz) is stored in the area c of the data area corresponding to the node (x + dx, y + dy, z) in the data storage area 11c in the node(x, y, z + dz) for each number of hops dx, dy and dz. Thus, when the data transmissions in the Z-axis direction from each node are completed (S216: Yes), the transmission destination and transmission data determination unit 12b proceeds with the process to S216 to perform a barrier synchronization. Further, the transmission destination and transmission data determination unit 12b proceeds with the process to S219 in FIG. 17C.

In S219, the transmission destination and transmission data determination unit 12b sets the number of hops dy for data transmission in the Y-axis direction to 1. Next, the process proceeds to S220. In S220, the transmission destination and transmission data determination unit 12b sets the number of hops dx for data transmission in the X-axis direction and the number of hops dz for data transmission in the Z-axis direction to the number of hops dx and dz for which the data transmission has not been performed. And then the transmission destination and transmission data determination unit 12b selects the node (x, y + dy, z) as the transit node for the data stored in the area b of the area for the node (x + dx, y + dy, z + dz) among the data stored in the data storage area 11c in the own node.

Next, in S221, the transmission timing determination unit 12c sets the intra-packet gap for data transmission to dy - 1 (gap = dy - 1) according to the number of hops dy for data transmission in the Y-axis direction. Next, the process proceeds to S222.

In S222, the transmission destination and transmission data determination unit 12b performs data transmission based on the intra-packet gap set by the transmission timing determination unit 12c in S221. Specifically, the transmission destination and transmission data determination unit 12b transmits the data which is stored in the area b of the area for the node (x + dx, y + dy, z + dz) among the data stored in the data storage area 11c to the node (x, y + dy, z), which is the transit node, via the NIC 15b and the router 14. The node (x, y + dy, z) receives the data transmitted via the router 14 and the NIC 15b from the node (x, y, z). And, the node (x, y + dy, z) stores the received data in the area b of the area for which the destination is the node(x + dx, y, z + dz) in the data storage area 11c in the node (x, y + dy, z).

In S223, the transmission destination and transmission data determination unit 12b determines whether or not the data transmission to the above transit node is completed for the values of dy available for the all-to-all communication in the interconnect. When there is data which has not been transmitted to the transit node (x, y + dy, z) in the data storage area 11b in the own node (S223 : No), the transmission destination and transmission data determination unit 12b proceeds with the process to S224.

In S224, the transmission destination and transmission data determination unit 12b determines whether or not the data transfer for the number of hops dy in the Y-axis direction is completed. In the present example, the processes of S220 to S222 as described above are repeated by fixing the number of hops dy in the Y-axis direction and changing the number of hops dx in the X-axis direction and the number of hops dz in the Z-axis direction. As a result, the data transmission with the same number of hops dy in the Y-axis direction is performed collectively.

Thus, when there is data with the number of hops dx in the X-axis direction or the number of hops dz in the Z-axis direction for which the data transmission processes have not been performed in S220 to S222 among the data to be transmitted with the above number of hops dy in the Y-axis direction (S224: No), the transmission destination and transmission data determination unit 12b returns the process from S224 to S220.

Further, when the steps from S220 to S222 are repeated and the data transmissions with the number of hops dy in the Y-axis direction are completed for the possible number of hops dx in the X-axis direction and the possible number of hops dz in the Z-axis direction (S224 :Yes), the transmission destination and transmission data determination unit 12b proceeds with the process to S225.

In S225, the transmission control unit 12a instructs performing a barrier synchronization to the barrier synchronization unit 12e. When the barrier synchronization unit 12e of each node performs a barrier synchronization, the nodes in the interconnect perform together the barrier synchronization of S225 and the update of the number of hops dy in the Y-axis direction of S226. In S226, the transmission destination and transmission data determination unit 12b updates the number of hops dy in the Y-axis direction to the number of hops in the Y-axis direction for which the data transmission has not been performed in S220 to S222. Similar to Example 1, as long as the data transmissions to the transit nodes for the possible numbers of dy in the all-to-all communication in the interconnect are completed, the method of updating the number of hops is arbitrarily defined to perform the process of S226. When the number of hops dy in the Y-axis direction is updated in S226, the transmission destination and transmission data determination unit 12b returns the process to S220. And the transmission destination and transmission data determination unit 12b uses the updated number of hops dy in the Y-axis direction to perform the processes of S220 to S224 for each possible number of hops dx in the X-axis direction and each possible number of hops dz in the Z-axis direction.

When the processes of S220 to S226 are repeated, the data stored in the area b among the data to be transmitted to the node (x + dx, y + dy, z + dz) is stored in the area b of the data area corresponding to the node(x + dx, y, z + dz) in the data storage area 11c in the node (x, y + dy, z) for each number of hops dx, dy and dz. Thus, when the data transmissions in the Y-axis direction from each node are completed (S223: Yes), the transmission destination and transmission data determination unit 12b completes the data transmission processes.

The above is the description of the processes in which each node (x, y, z) transmits data to be transmitted to the node (x + dx, y + dy, z + dz) in the X-axis direction, the Y-axis direction or the Z-axis direction according to the area a or b or c in which the data is stored. In the present embodiment, after the processes as described above are completed, the data stored in the area b as a data area in the data storage area 11c is transmitted in the X-axis direction by performing similar processes. In addition, the data stored in the area c and the data stored in the area a are transmitted in the Y-axis direction and in the Z-axis direction respectively.

Further, after the above data transmissions are completed, the data stored in the area c in the data storage area 11c is transmitted in the X-axis direction by performing similar processes. Moreover, the data stored in the area a and the data stored in the area b are transmitted in the Y-axis direction and in the Z-axis direction respectively.

When each node performs the above processes, the data to be transmitted to the target node is transmitted via three separate routes. As a result, the data which each node transmits to the target node is stored in the area corresponding to the originating node in the data storage area 11c in the target node.

Incidentally, as long as the data transmissions are performed as described above, it is arbitrarily determined which data stored in the area a or b or c is transmitted to the X-axis direction or the Y-axis direction or the Z-axis direction. That is, when focus is put on the data transmissions in the X-axis direction in the processes as described above, the data transmissions in the X-axis direction are performed to the data stored in the area a and then to the data stored in the area b and then to the data stored in the area c. However, in some cases, the data transmissions in the X-axis direction are performed, for example, to the data stored in the area c and then to the data stored in the area a and then to the data stored in the area b, as long as the data to be transmitted in the X-axis direction is not redundantly transmitted in the Y-axis direction or in the Z-axis direction.

According to the present embodiment, the data transmission routes from the originating node to the destination node are divided according to time-sharing. And the data transmissions in the same direction and with the same number of hops are performed collectively. As a result, the packets to be transmitted with different number of hops are not mixed in the interconnect. In addition, since the number of barrier synchronizations in the all-to-all communication decreases , the overhead of the data transmissions due to the barrier synchronizations are reduced and the performance of the data transmission in the all-to-all communication is improved. Further, a data transmission route is divided into a plurality of routes and pieces of data are configured not to be transmitted via the same route and with the same timing. Thus, the data transmission load on each route is distributed.

Although the present embodiment is described as above, the conf igurations and the processes of the nodes are not limited to those as described above and various variations may be made to the embodiment described herein within the technical scope of the present invention. For example, it is arbitrarily determined in which order the direction of the data transmission is specif iedamong the directions in which each node is connected. In addition, although it is assumed in the above descriptions that the nodes are arranged in a grid pattern, the arrangement pattern of the nodes is not limited to the grid pattern.

### <<Computer Readable Recording Medium>>

It is possible to record a program which causes a computer to implement any of the functions described above on a computer readable recording medium. By causing the computer to read in the program from the recording medium and execute it, the function thereof can be provided. Here, the computer includes the nodes 1 for example.

The computer readable recording medium mentioned herein indicates a recording medium which stores information such as data and a program by an electric, magnetic, optical, mechanical, or chemical operation and allows the stored information to be read from the computer. Of such recording media, those detachable from the computer include, e.g., a flexible disk, a magneto-optical disk, a CD-ROM, a CD-R/W, a DVD, a DAT, an 8-mm tape, and a memory card. Of such recording media, those fixed to the computer include a hard disk and a ROM (Read Only Memory).

An information processing system and a controlling method of an information processing system according to one embodiment may optimize the communication efficiency.

## Claims

1. An information processing system (1) in which a plurality of information processing apparatuses (10, 20, 30, 40, 50) are connected with each other, wherein the information processing apparatuses are arranged in an interconnection network defined by a coordinate system having one, two or three axes, and each information processing apparatus is configured to transmit data in transmission directions determined by the connection, wherein
each information processing apparatus includes:
a storage unit (11) configured to store data according to each destination of the data, which destination is one of the information processing apparatuses; and
a transmission control unit (12a) configured to transmit the stored data, **characterized in that**:
said stored data is to be transmitted in the same transmission direction and with the same number of hops, collectively, wherein data to be transmitted to a destination is divided into more than one piece of data and stored in the storage unit,
the transmission control unit is configured to transmit the divided pieces of data in different transmission directions, and
each information processing apparatus includes a barrier synchronization unit (12e) configured to perform a barrier synchronization when data transmission in one of the different transmission directions is completed, wherein the barrier synchronization is a synchronization which is performed, when a plurality of the information processing apparatuses perform processing in parallel, for each information processing apparatus to confirm with each other information processing apparatus that each information processing apparatus, of the plurality of the information processing apparatuses performing processing in parallel, has completed a given process.

2. The information processing system according to claim 1, wherein each information processing apparatus is connected with each other in a mesh structure or in a torus structure.

3. A method of controlling an information processing system (1) in which a plurality of information processing apparatuses (10, 20, 30, 40, 50) are connected with each other, wherein the information processing apparatuses are arranged in an interconnection network defined by a coordinate system having one, two or three axes, and each information processing apparatus transmits data in transmission directions determined by the connection, each information processing apparatus including a storage unit (11) configured to store data according to each destination of the data, which destination is one of the information processing apparatuses, the method comprising:
transmitting from each originating information processing apparatus the stored data, which is to be transmitted in the same transmission direction and with the same number of hops, collectively;
receiving the collectively transmitted data by each destination, which destination is said one of the information processing apparatuses; and
performing a barrier synchronization when data transmission in one of the different transmission directions is completed, wherein
each information processing apparatus divides data to be transmitted into more than one piece of data and stores the divided data in the storage unit, and
the divided pieces of data are transmitted in different transmission directions, wherein the barrier synchronization is a synchronization which is performed, when a plurality of the information processing apparatuses perform processing in parallel, for each information processing apparatus to confirm with each other information processing apparatus that each information processing apparatus, of the plurality of the information processing apparatuses performing processing in parallel, has completed a given process.

4. The method of controlling an information processing system according to claim 3, wherein each information processing apparatus is connected with each other in a mesh structure or in a torus structure.

## Patentansprüche

1. Ein Informationsverarbeitungssystem (1), bei welchem eine Vielzahl von Informationsverarbeitungsvorrichtungen (10, 20, 30, 40, 50) miteinander verbunden sind, wobei die Informationsverarbeitungsvorrichtungen in einem Zwischenverbindungsnetzwerk angeordnet sind, welches durch ein Koordinatensystem mit einer, zwei oder drei Achsen definiert ist, und jede Informationsverarbeitungsvorrichtung zum Übertragen von Daten in durch die Verbindung bestimmten Übertragungsrichtungen ausgebildet ist, wobei
jede Informationsverarbeitungsvorrichtung umfasst:
eine Speichereinheit (11), ausgebildet zum Speichern von Daten entsprechend jedem Ziel der Daten, wobei das Ziel eine der Informationsverarbeitungsvorrichtungen ist; und
eine Übertragungssteuereinheit (12a), ausgebildet zum Übertragen der gespeicherten Daten,
**dadurch gekennzeichnet, dass**:
die gespeicherten Daten in derselben Übertragungsrichtung und mit derselben Anzahl von Hops gemeinsam zu übertragen sind, wobei die zu einem Ziel zu übertragenden Daten in mehr als einen Datenteil geteilt und auf der Speichereinheit gespeichert werden,
die Übertragungssteuereinheit zum Übertragen der geteilten Datenteile in unterschiedliche Übertragungsrichtungen ausgebildet ist, und
jede Informationsverarbeitungsvorrichtung eine Barrieresynchronisationseinheit (12e) umfasst, welche zum Ausführen einer Barrieresynchronisation ausgebildet ist, wenn eine Datenübertragung in einer der unterschiedlichen Übertragungsrichtungen abgeschlossen ist, wobei die Barrieresynchronisation eine Synchronisation ist, welche ausgeführt wird, wenn eine Vielzahl der Informationsverarbeitungsvorrichtungen eine Verarbeitung parallel ausführen, womit jede Informationsverarbeitungsvorrichtung einer jeden anderen Informationsverarbeitungsvorrichtung bestätigt, dass jede Informationsverarbeitungsvorrichtung der Vielzahl der Informationsverarbeitungsvorrichtungen, welche eine Verarbeitung parallel ausführen, einen gegebenen Prozess abgeschlossen hat.

2. Informationsverarbeitungssystem gemäß Anspruch 1, wobei jede Informationsverarbeitungsvorrichtung mit einer jeweils anderen in einer Netzstruktur oder in einer Ringstruktur verbunden ist.

3. Ein Verfahren zum Steuern eines Informationsverarbeitungssystems (1), in welchem eine Vielzahl von Informationsverarbeitungsvorrichtungen (10, 20, 30, 40, 50) miteinander verbunden sind, wobei die Informationsverarbeitungsvorrichtungen in einem Zwischenverbindungsnetzwerk angeordnet sind, welches durch ein Koordinatensystem mit einer, zwei oder drei Achsen definiert ist, und jede Informationsverarbeitungsvorrichtung Daten in einer durch die Verbindung bestimmte Übertragungsrichtung überträgt, wobei jede Informationsverarbeitungsvorrichtung eine Speichereinheit (11) umfasst, welche zum Speichern von Daten entsprechend einem jeden Ziel der Daten ausgebildet ist, wobei das Ziel eine der Informationsverarbeitungsvorrichtungen ist, wobei das Verfahren umfasst:
Übertragen der gespeicherten Daten von einer jeden Ursprungsinformationsverarbeitungsvorrichtung, welche in derselben Übertragungsrichtung und mit derselben Anzahl von Hops gemeinsam zu übertragen sind;
Empfangen der gemeinsam übertragenen Daten durch jedes Ziel, wobei ein Ziel die eine der Informationsverarbeitungsvorrichtungen ist; und
Ausführen einer Barrieresynchronisation, wenn eine Datenübertragung in einer der unterschiedlichen Übertragungsrichtungen abgeschlossen wird, wobei
jede Informationsverarbeitungsvorrichtung zu übertragende Daten in mehr als einen Datenteil teilt und die geteilten Daten auf der Speichereinheit speichert, und
die geteilten Datenteile in unterschiedlichen Übertragungsrichtungen übertragen werden, wobei die Barrieresynchronisation eine Synchronisation ist, welche ausgeführt wird, wenn eine Vielzahl der Informationsverarbeitungsvorrichtungen eine Verarbeitung parallel ausführen, womit jede Informationsverarbeitungsvorrichtung einer jeden anderen Informationsverarbeitungsvorrichtung bestätigt, dass jede Informationsverarbeitungsvorrichtung der Vielzahl der Informationsverarbeitungsvorrichtungen, welche eine Verarbeitung parallel ausführen, einen gegebenen Prozess abgeschlossen haben.

4. Verfahren zum Steuern eines Informationsverarbeitungssystems gemäß Anspruch 3, wobei jede Informationsverarbeitungsvorrichtung mit einer jeweils anderen in einer Netzstruktur oder in einer Ringstruktur verbunden wird.

## Revendications

1. Système de traitement d'informations (1) dans lequel une pluralité d'appareils de traitement d'informations (10, 20, 30, 40, 50) sont reliés l'un à l'autre, dans lequel les appareils de traitement d'informations sont agencés en un réseau d'interconnexion défini par un système de coordonnées possédant un, deux ou trois axes, et chaque appareil de traitement d'informations est configuré pour transmettre des données dans des directions de transmission déterminées par la connexion, dans lequel
chaque appareil de traitement d'informations comprend :
une unité de stockage (11) configurée pour stocker des données selon chaque destination des données, laquelle destination est l'un des appareils de traitement d'informations ; et
une unité de contrôle de transmission (12a) configurée pour transmettre les données stockées **caractérisée en ce que** :
lesdites données stockées doivent être transmises dans la même direction de transmission et avec le même nombre de sauts, collectivement, dans lequel les données à transmettre à une destination sont divisées en plus d'une donnée et stockées dans l'unité de stockage,
l'unité de contrôle de transmission est configurée pour transmettre les données divisées dans différentes directions de transmission, et
chaque appareil de traitement d'informations comprend une unité de synchronisation de barrière (12e) configurée pour effectuer une synchronisation de barrière lorsque la transmission de données dans l'une des différentes directions de transmission est achevée, dans lequel la synchronisation de barrière est une synchronisation qui est effectuée, lorsqu'une pluralité d'appareils de traitement d'informations effectue un traitement en parallèle, pour chaque appareil de traitement d'informations afin de confirmer à chaque autre appareil de traitement d'informations que chaque appareil de traitement d'informations, parmi la pluralité d'appareils de traitement d'informations effectuant un traitement en parallèle, a achevé un processus donné.

2. Système de traitement d'informations selon la revendication 1, dans lequel chaque appareil de traitement d'informations est relié à chaque autre selon une structure maillée ou une structure en tore.

3. Procédé pour contrôler un système de traitement d'information (1) dans lequel une pluralité d'appareils de traitement d'informations (10, 20, 30, 40, 50) sont reliés l'un à l'autre, dans lequel les appareils de traitement d'informations sont agencés selon un réseau d'interconnexion défini par un système de coordonnées possédant un, deux ou trois axes, et chaque appareil de traitement d'informations transmet des données dans des directions de transmission déterminées par la connexion, chaque appareil de traitement d'informations comprenant une unité de stockage (11) configurée pour stocker des données conformément à chaque destination des données, laquelle destination est l'un des appareils de traitement d'informations, le procédé comportant :
la transmission à partir de chaque appareil de traitement d'informations d'origine des données stockées, qui doivent être transmises dans la même direction de transmission et avec le même nombre de sauts, collectivement;
la réception des données transmises collectivement par chaque destination, laquelle destination est ledit un des appareils de traitement d'informations ; et
l'exécution d'une synchronisation de barrière lorsque la transmission de données dans l'une des différentes directions de transmission est achevée, dans lequel
chaque appareil de traitement d'informations divise les données à transmettre en plus d'une donnée et stocke les données divisées dans l'unité de stockage, et
les données divisées sont transmises dans différentes directions de transmission, où la synchronisation de barrière est une synchronisation qui est effectuée, lorsqu'une pluralité d'appareils de traitement d'informations effectue un traitement en parallèle, pour chaque appareil de traitement d'informations afin de confirmer avec chaque autre appareil de traitement d'informations que chaque appareil de traitement d'informations, parmi la pluralité d'appareils de traitement d'informations effectuant un traitement en parallèle, a achevé un processus donné.

4. Procédé de contrôle d'un système de traitement d'informations selon la revendication 3, dans lequel chaque appareil de traitement d'informations est relié à chaque autre selon une structure maillée ou une structure en tore.
